# EUROPEAN PATENT SPECIFICATION

(11) **EP 2 949 211 B1**
(45) Date of publication and mention of the grant of the patent: **20.12.2017**
(21) Application number: 14743512.7
(22) Date of filing: 28.01.2014
(51) Int. Cl.: A01M 1/10, A01M 1/02

(54) **INSECT-PEST COLLECTION APPARATUS**
SAMMELVORRICHTUNG FÜR INSEKTENSCHÄDLINGE
APPAREIL DE COLLECTE D'INSECTES NUISIBLES

(30) Priority: 28.01.2013 JP 2013013031; 25.03.2013 JP 2013062420
(43) Date of publication of application: 02.12.2015
(73) Proprietor: Kondo Electronics Co., Ltd., Osaka 571-0002 (JP)
(72) Inventor: KONDO, Tetsuya, Kadoma-shi Osaka 571-0002 (JP)
(74) Representative: Puschmann Borchert Bardehle Patentanwälte Partnerschaft mbB
(86) International application number: PCT/JP2014/000418
(87) International publication number: WO 2014/115568

(56) References cited:
- FR-A1- 2 937 220
- JP-A- 2001 037 395
- JP-A- 2001 169 708
- JP-A- 2001 354 503
- JP-A- 2002 253 103
- JP-A- 2002 253 103
- JP-A- 2006 067 810
- JP-A- 2007 267 713
- JP-A- 2007 267 713
- JP-A- 2010 227 049

## Description

The present invention relates to an insect pest gathering apparatus.

The poultry industry recently flourishes in various nations of the world such as Japan, Europe, Southeast Asia, the USA, North America and South America. The governments of the various nations control spread of a virus regarding an infectious disease such as avian influenza as a notifiable infectious disease. On the other hand, in order to prevent a virus from invading a poultry house, an environment for raising poultry is controlled by introducing a closed-type poultry house (for example, windowless poultry house) or the like. This therefore can create an environment where poultry is almost completely isolated from a virus. However, like this creation of environment is entrusted to efforts of business owners at present.

Further, in accordance with recent revision of Law of Humane Treatment and Management of Animals, business owners are obligated to improve a raising environment or technique and keep it in good condition. Therefore, a burden requiring a business effort is increasing. On the other hand, among insect pests increasing in number in accordance with deterioration of the raising environment, a red mite (Dermanyssus gallinae) particularly causes a direct damage on poultry production. The influence is beginning to come to the surface in the whole world.

However, there is a lot of uncertainty about a relation between the increase of red mites and quality of the raising environment. Timing or an effective method of extermination is not established at present.

In a living environment for the red mites, continuation of hot and humid surroundings such as a rainy season causes an explosive increase in the number of red mites. Unfortunately, the number of red mites having a body length of approximately 0.5 to 1.0 mm rapidly increases particularly in the closed-type poultry house. The red mites are particularly attracted to a narrow place such as a gap between objects (for example, a metal hinge portion of a poultry cage) where a colony is formed. The red mites crawl out of such a gap or the like and become parasitic on poultry in the cage to suck blood. An egg collecting rate and quality of egg are disadvantageously reduced due to the poultry whose blood is sucked by such red mites. Therefore, it is extremely important for poultry farmers' business to eliminate the damage due to the red mites.

In addition to the damage with respect to poultry in the cage, the red mite may cling to a worker working in the cage to suck blood. In this instance, the person may suffer from dermatitis or an itch for a long time, or allergy symptoms may be caused. Exterminating the red mites leads not only to improvement of the raising environment but also to improvement of a work environment for workers.

Conventionally, red mites have been commonly exterminated by spraying a chemical such as an insecticide. Such a chemical however may include a substance also toxic to humans or poultry, leading to restriction of usage thereof. When the chemical is sprayed to the poultry house, the poultry need to be moved to another place. Since such movement causes the poultry stress, the egg collecting rate is disadvantageously reduced due to the stress.

Since the chemical does not enter a narrow place such as a hinge of a cage for housing the poultry in the poultry house, red mites in such a place cannot be exterminated. Moreover, an individual that develops a resistance to the chemical may come into existence among the red mites in the case of spraying the chemical for several times. When the number of such red mites increases, a common chemical does not work on such red mites, unfortunately.

Recently, a technique for catching insect pests not using a chemical but using electricity has been developed. More specifically, a technique has been developed in which insect pests or the like are physically caught by using electrostatic induction caused by an electric field, for example, JP2005-204514A, JP2006-255690A, and 2010-279270A. According to the technique, an electric field is generated by applying a high voltage to a pair of separated electrodes, and then the electrostatic induction is caused inside insect pests approaching the electrodes, thereby causing the insect pests to adhere to the electrodes. That is, the technique utilizes a principle of electrostatic adsorption that is described as follows.

When a high voltage is applied to the pair of electrodes, a potential difference is generated between the pair of electrode, followed by generating an electric field there between. When an insect pest or the like enters the electric field, electrostatic induction can be caused inside the insect pest. That is, imbalance of charge can be caused on a body surface of the insect pest or the like by the electrostatic induction. Then, the imbalance of charge generated on the body surface and the Coulomb force generated between the electrodes cause the insect pest or the like in such a state to adhere to the electrode, thereby catching the insect pest or the like. According to the technique, small insect pests such as aphids and mites that are difficult to catch with an insect screen or the like can be advantageously caught without using a chemical. The technique may therefore be applied to catching red mites in the poultry house.

Alternatively, a technique has been developed in which insect pests or the like are attracted to a predetermined place by pheromone or light (such as ultraviolet rays), for example, causing a color attracting the insect pests or the like to shine, for example, JP2009-261317A.

An apparatus also has been developed in which a pair of plates is provided so as to form space therebetween on the order of 0.5 to 3 mm. Consequently, mites are caught in the space, for example, JP2006-67810A.

According to the technique for catching insect pests by the electrostatic induction such as JP2005-204514A, JP2006-255690A, and 2010-279270A, only an insect pest that happens to enter the electric field generated by the electrodes is caught. Therefore, the technique cannot cause insect pests to be attracted to the electric field. In other words, the technique employing the electrostatic induction is no more than a technique similar to a spider web in which an insect pest that happens to enter is caught by a web made of adhesive spider silk. Consequently, according to the technique for catching insect pests by the electrostatic induction, the insect pests cannot be caught unless the insect pests enter the electric field generated by the electrodes. Moreover, a high voltage needs to be applied to the electrodes for causing the electrostatic induction. Therefore, a place for the usage or handling is disadvantageously limited.

On the other hand, the technique for attracting insect pests by light or the like such as JP2009-261317A has a function of attracting insect pests but does not have a function of catching the attracted insect pests. Moreover, when light for attracting insect pests is used, the light always needs to radiate. Therefore, a place for the usage is limited, and further, the light may have an undesirable influence on people or other animals.

As for the apparatus disclosed in JP 2006-67810 A, there are not any problems such as in JP2005-204514A, JP2006-255690A and JP2010-279270A disclosing the technique of using the static electricity or in JP 2009-261317 A disclosing the technique of using light or the like. This is because the pair of plates is simply provided having the space there between. However, similarly to the techniques of JP 2005-204514 A, JP 2006-255690 A, and JP 2010-279270 A, red mites are expected to accidentally enter the space between the pair of plates in the apparatus of JP 2006-67810 A. Moreover, the apparatus of JP 2006-67810 A does not have a function of catching the red mites having entered the space. In fact, the apparatus of JP 2006-67810 A is not for catching the red mites. The apparatus can only catch red mites or the like that happen to be in the space when being checked.

JP 2002-253103 A discloses an insect pest gathering apparatus for gathering insect pests or the like such as mites and fleas. This apparatus comprises a gathering portion having a porous structure with a large number of holes continuously lying from a surface to an inside, wherein a hole diameter of the hole in the gathering portion has a length suitable for entering by the insect pest or the like.

JP 2007-267713 A discloses an insect pest attracting device comprising a het retaining portion. The material of this retaining portion is foam of synthetic resin.

FR 2 937 220 A1 and JP 2001-169708 A disclose insect pest attracting device made of corrugated cardboard on which an adhesive layer is applied.

In view of the above circumstances, an object of the present invention is to provide an insect pest gathering apparatus with which insect pests or the like such as mites including red mites and northern fowl mites, and fleas can be attracted, followed by catching and exterminating the attracted insect pests or the like, the apparatus allowing anyone to easily handle.

An insect pest gathering apparatus according to a first feature of the present invention is for gathering insect pests or the like such as mites and fleas, including: a gathering portion having a porous structure with a large number of holes continuously lying from a surface to an inside, wherein a hole diameter of the hole in the gathering portion has such a length that the insect pest or the like can enter the hole, wherein a heat retaining portion is provided on an outer surface of the gathering portion, wherein a material of the heat retaining portion is corrugated cardboard. The gathering portion includes a large number of holes continuously lying from the surface to the inside. The hole becomes a place for the insect pests or the like to hide if the hole is formed in such a size that insect pests or the like can enter. Therefore, when the insect pest gathering apparatus of the present invention is provided on a predetermined place in a poultry house, some of red mites parasitic on the poultry, and some of insect pests or the like having entered a gap in the poultry house, a poultry cage or the like can be gathered in the gathering portion.

An insect pest gathering apparatus according to a second feature of the present invention having projections and depressions on both of or one of surfaces of the heat retaining portion and the gathering portion facing each other.

An insect pest gathering apparatus according to a further feature of the present invention is the first feature of the present invention, wherein the gathering portion has the holes with the hole diameter slightly smaller than a width including a leg of the insect pest or the like to be caught. According to this feature the insect pest or the like can enter the hole but cannot come out of the hole.

An insect pest gathering apparatus according to a further feature of the present invention is the first, second or third feature of the present invention, wherein the gathering portion randomly has the holes inside thereof with the hole diameter of approximately 0.01 to 1 mm. Therefore, probability of gathering insect pests or the like, particularly mites including red mites and northern fowl mites, fleas and the like as well as a rate of catching the insect pests or the like can be increased.

An insect pest gathering apparatus according to a further feature of the present invention has the gathering portion which is made of a material having flexibility. Thus, the insect pests or the like can easily enter the gathering portion. Therefore, the insect pests or the like can be easily gathered in the gathering portion.

An insect pest gathering apparatus according to a further feature of the present invention having the heat retaining portion provided on the outer surface of the gathering portion and/or the gathering portion have a moisturizing function. Therefore, the gathering portion can be maintained at a stable temperature compared with surroundings, thereby capable of providing an environment for the gathering portion where insect pests or the like forming a colony such as red mites can easily form a colony. As the gathering portion and/or the heat retaining portion have the moisturizing function, it is capable of easily maintaining the gathering portion in the environment where the insect pests or the like can easily form a colony.

An insect pest gathering apparatus according to a further feature of the present invention has projections and depressions. The projections and depressions are provided on both of or one of surfaces of the heat retaining portion and the gathering portion facing each other. Since space between the gathering portion and the heat retaining portion can be formed, the red mites can also gather between the gathering portion and the heat retaining portion. Such space is more suitable for forming a colony than the hole, thereby further facilitating gathering the insect pests or the like that form a colony.

An insect pest gathering apparatus according to a further feature of the present invention has the heat retaining portion which is made of a material having hollow space inside thereof. The gathering portion or space between the gathering portion and the heat retaining portion can be easily maintained in the environment where the insect pests or the like easily form a colony. Further, some of the insect pests or the like gathered in the gathering portion can be gathered in the hollow space inside the heat retaining portion.

An insect pest gathering apparatus according to a further feature of the present has a material of the heat retaining portion which is corrugated cardboard. Thus, the gathering portion can be easily and inexpensively formed. Further, the corrugated cardboard has space inside thereof, and therefore, some of the insect pests or the like gathered in the gathering portion can be gathered in the space inside the corrugated cardboard. In particular, paper corrugated cardboard allows the temperature and humidity in the gathering portion to be easily maintained because it has a moisturizing property. If the paper corrugated cardboard is used, the insect pest gathering apparatus can be incinerated. Consequently, the gathered insect pests can be easily exterminated.

An insect pest gathering apparatus according to a further feature of the present invention has a through hole which is formed in the heat retaining portion, the through hole extending between a surface on a side of the gathering portion and an outer surface. Therefore, the insect pests or the like can be easily gathered in the gathering portion even if the heat retaining portion is provided.

An insect pest gathering apparatus according to a further feature of the present invention is formed in a size similar to a chicken egg. Thereby, the apparatus is capable of being provided on an automatic egg conveyor belt. This can save a worker from having to install and collect the apparatus because the installation and collection of the apparatus can be automated. Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown
- Fig. 1: schematic views of an insect pest gathering apparatus 1 in an embodiment: (A) is a sectional view and (B) is a perspective view;
- Fig. 2: (A) as a schematic view of a red mite and (B) is a partially enlarged view of a gathering portion 11;
- Fig. 3: schematic views illustrating how the insect pest gathering apparatus 1 in the present embodiment is used: (A) is a sectional view of a windowless poultry house CH and (B) is a schematic view illustrating how the insect pest gathering apparatus 1 in the present embodiment is installed in the windowless poultry house CH;
- Fig. 4: an enlarged photograph of a material usable for the gathering portion 11 of the insect pest gathering apparatus 1 in the present embodiment where a minimum scale of a ruler in the photograph is 0.1 mm;
- Fig. 5: a schematic view of an insect pest gathering apparatus 1 in another embodiment;
- Fig. 6: schematic views of insect pest gathering apparatuses 1A and 1B in other embodiments;
- Fig. 7: schematic views of a heat retaining portion in another embodiment;
- Fig. 8: schematic views of an insect pest gathering apparatus 1C in another embodiment;
- Fig. 9: photographs of insect pest gathering apparatuses used in an experiment;
- Fig. 10: a graph showing experimental results;
- Fig. 11: photographs of the insect pest gathering apparatuses after the experiment, and
- Fig. 12: enlarged photographs showing red miles caught in the insect pest gathering apparatus.

Now, an embodiment of the present invention will be described with reference to the drawings.

An insect pest gathering apparatus of the present invention is an apparatus for gathering and catching insect pests or the like such as mites including red mites and northern fowl mites, and fleas, with which apparatus the insect pests or the like can be gathered by providing an environment attracting the insect pests or the like.

The insect pest gathering apparatus of the present invention is suitable for catching mites including red mites and northern fowl mites, fleas, and the like, however, the insect pests or the like to be caught are not particularly limited. When the insect pests or the like to be caught form a colony similarly to red mites or the like, the insect pest gathering apparatus can catch the insect pests or the like more effectively.

Hereinafter, a case of catching red mites, as an example of insect pests or the like to be caught, will be described.

Note that, in the description, gathering is a concept including all states where insect pests such as individual red mites gather in crowds, individuals of the insect pests such as red mites are piled up, and a large number of insect pests such as red mites form a colony.

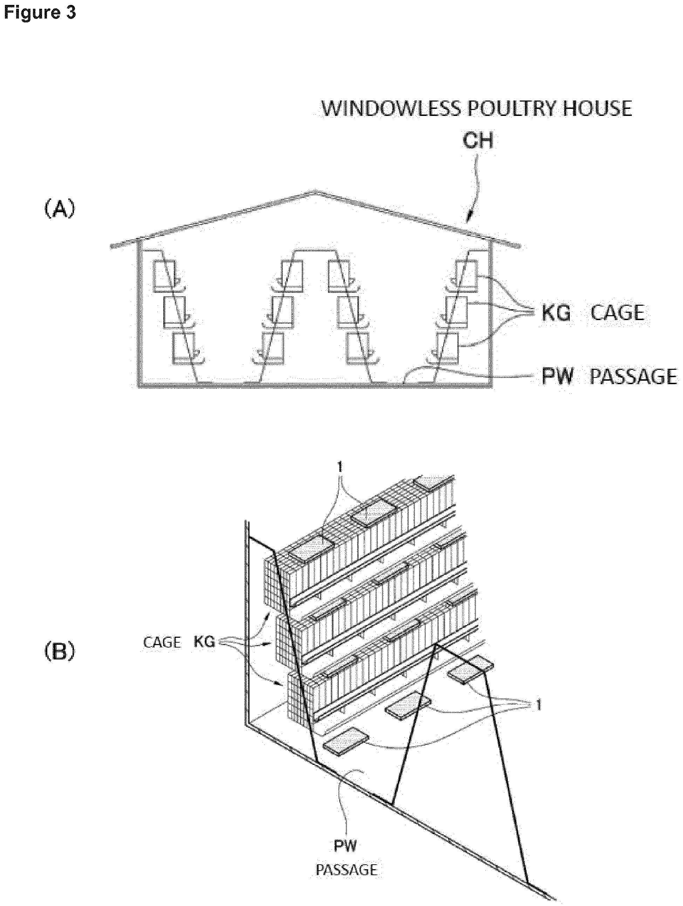

A place where the insect pest gathering apparatus of the present invention is used is not particularly limited. For example, the apparatus can be used in a windowless poultry house CH provided with a temperature and humidity controller or the like having a function of controlling a temperature, humidity or the like inside thereof. Such a poultry house CH includes a closed type poultry house without a window (windowless poultry house), as shown in Fig. 3, for example. The poultry house CH is provided with a passage PW for a worker passing. A plurality of poultry cages KG is provided in a step-wise manner sandwiching the passage PW. A common cage for collecting eggs can be used as the poultry cage KG, for example. The poultry cage KG may be any as long as it can house poultry for raising, and a shape thereof or the like is not particularly limited.

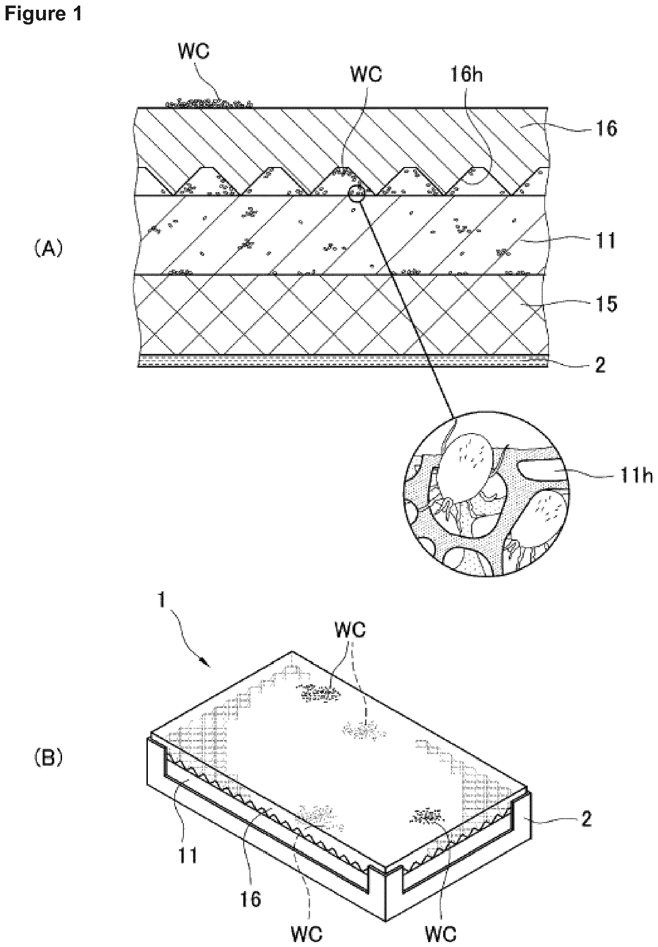

As shown in Fig. 1, an insect pest gathering apparatus 1 in an embodiment includes a case 2, a gathering portion 11 and a pair of heat retaining portions 15, 16.

The case 2 is a member for holding the gathering portion 11 and the pair of heat retaining portions 15, 16. More specifically, the case 2 has housing space on which the gathering portion 11 and the pair of heat retaining portions 15, 16 are provided. The space communicates with an outside of the case 2, thereby capable of ventilating an inside of the case 2. The case 2 has a structure in which a red mite can freely come and go between the inside and outside of the case 2.

For example, as shown in Fig. 1, one including a base plate and four corner members can be used as the case 2. The corner member is provided vertically on a top surface of the base plate and a section thereof is L-shaped (or angle-shaped). In this instance, a part above the top surface of the base plate, the part being surrounded by the four comer members corresponds to the housing space. The housing space can communicate with the outside through space between the adjacent corner members or space between top ends of the corner members.

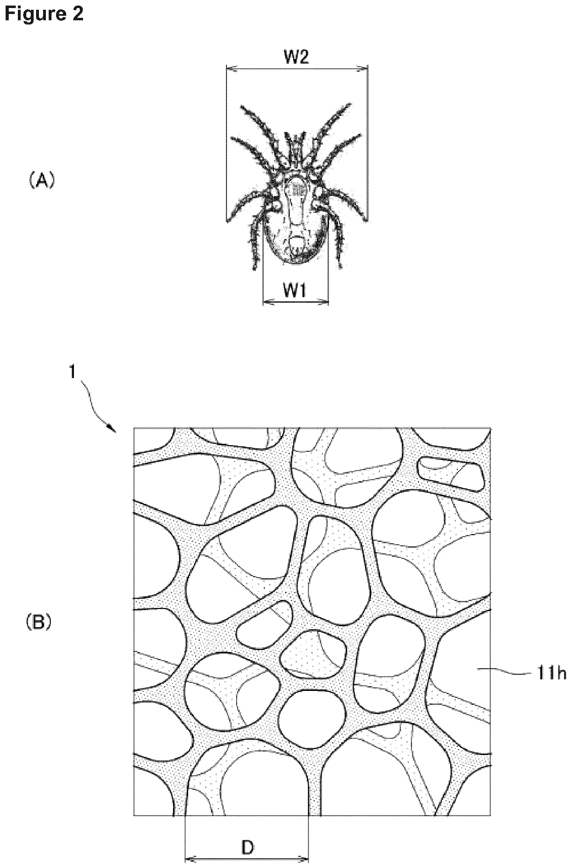

As shown in Fig. 1 and 2, the gathering portion 11 is a member having net-like space inside thereof. In other words, the gathering portion 11 is a member having a large number of holes 11h continuously lying inside thereof. The hole 11h (space) communicates with a surface of the gathering portion 11. A red mite or the like can enter the gathering portion 11 through the hole 11h.

The hole 11h of the gathering portion 11 further has a part with a hole diameter D longer than a width W1 (see Fig. 2(A)) of body of the red mite but shorter than a width W2 (see Fig. 2(A)) of body including legs. That is, the hole 11h of the gathering portion 11 has a part in such a size that the red mite can relatively easily move forward but cannot easily move backward.

A large number of openings are formed in the surface of the gathering portion 11, so that the holes 11h inside the gathering portion 11 communicate with an outside through the openings. Therefore, the gathering portion 11 (the holes 11h inside the gathering portion 11) is a perfect place for red mites to hide.

When the insect pest gathering apparatus 1 in the present embodiment is provided on a predetermined place in the poultry house CH, some of red mites parasitic on the poultry, and some of red mites having entered a gap in the poultry house, the poultry cage KG or the like can be gathered in the gathering portion 11 of the insect pest gathering apparatus 1. That is, the insect pest gathering apparatus 1 in the present embodiment has space and environment attracting the red mites, thereby causing the red mites to voluntarily move to the gathering portion 11 (in other words, attracting the red mites to the gathering portion 11). Consequently, the red mites can be gathered in the gathering portion 11.

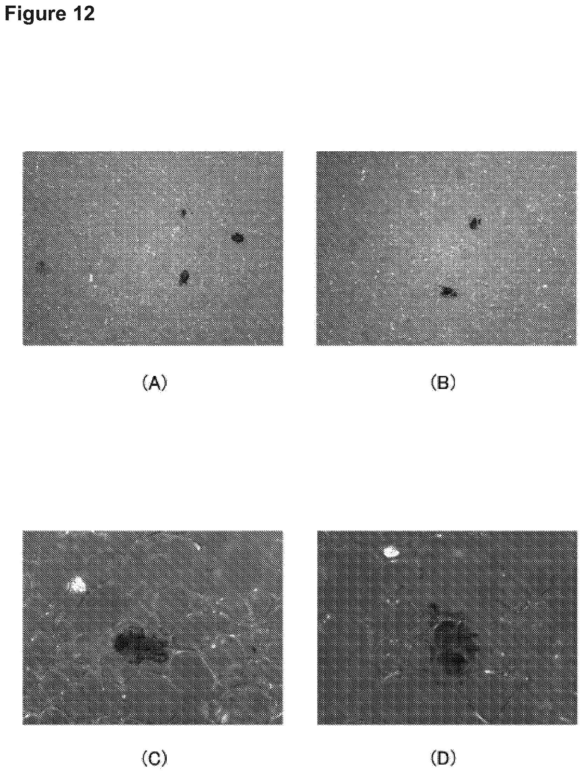

Moreover, since the hole 11 h has a part with the above hole diameter D, the red mite can enter the hole 11h but cannot come out of the hole 11h (or does not easily come out). Therefore, the gathering portion 11 can not only gather the red mites but also catch the gathered red mites (see Fig. 12).

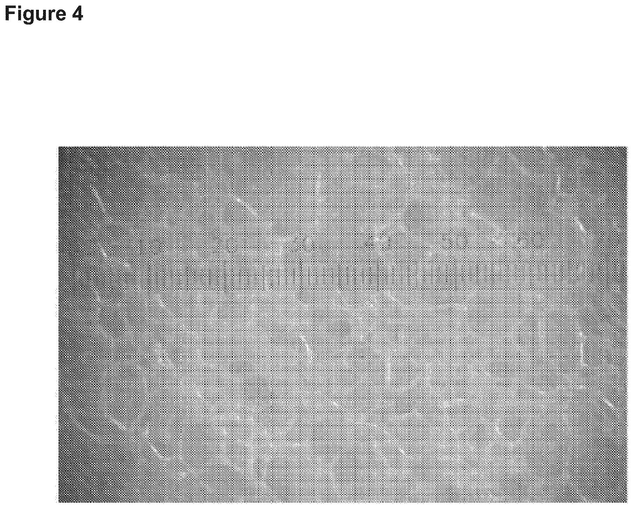

Preferably, the hole diameter D of the hole 11h formed in the gathering portion 11 is on the order of 0.01 to 1 mm, and the holes 11h having the hole diameter D within such a range randomly exist in the gathering portion 11 (see Fig. 4). That is, it is preferred that a large number of holes with various hole diameters of approximately 0.01 to 1 mm randomly exist.

An inside of the hole 11h in such a size is a comfortable place for red mites because the size of the space extremely attracts the red mites. Moreover, if the holes 11h with a long hole diameter D and the holes 11h with a short hole diameter D randomly exist, the red mite can move forward to enter the gathering portion 11 to some extent but cannot move backward or change a direction.

Therefore, when the hole diameter D of the hole 11h in the gathering portion 11 has the above length, probability of gathering red mites in the gathering portion 11 as well as a rate of catching red mites can be increased. In particular, if the holes 11h having the hole diameter D within the above range randomly exist in the gathering portion 11, the rate of catching red mites can be further increased.

The hole diameter D of the hotel 11h in the gathering portion 11 may have any length as long as it is suitable for a size of an insect pest or the like to be caught, not limited to the above range. That is, the hole 11h of the gathering portion 11 is formed so as to have a part with the hole diameter D longer than a width of body of the insect pest or the like to be caught but shorter than a width of body including a leg thereof. In that case, the insect pest or the like having entered the gathering portion 11 can be caught.

Meanwhile, even when each hole diameter D of the holes 11h in the gathering portion 11 is adjusted to the above length, not all the red mites or the like having entered the gathering portion 11 can be caught. When a red mite enters the hole 11h having the hole diameter D shorter than the width W2, the red mite is more likely to be caught in the gathering portion 11. However, with the hole 11h having the hole diameter D longer than the width W2, the red mite can freely come in and out of the hole 11h. That is, the gathering portion 11 can catch red mites, while the gathering portion 11 allows some of the red mites to freely come in and out inside thereof. Consequently, a search-type red mite that searches for a place to form a colony or the like can freely come in and out of the gathering portion 11, thereby easily causing the red mites to form the colony in the gathering portion 11.

In order to reduce the number of red mites coming out of the gathering portion 11 and increase efficiency of catching red mites, the gathering portion 11 preferably has adhesion. In this instance, the adhesion of the gathering portion 11 does not easily allow the red mite having entered the gathering portion 11 to move. Therefore, a rate of red mites coming out of the gathering portion 11 can be reduced. As a method for imparting the adhesion to the gathering portion 11, the following methods can be employed, for example, but not particularly limited thereto; namely a method for forming the gathering portion 11 with a material having adhesion (natural rubber-based, synthetic rubber-based or acrylic-based material as a main ingredient, for example), or a method for forming a layer of material having adhesion on the surface of the gathering portion 11 (the surface of net-like part including the holes 11h). The method for forming a layer of material having adhesion on the surface of the gathering portion 11 is not particularly limited. The following methods can be employed, for example; namely a method for spraying a solution or the like (such as a liquid adhesive) containing a material having adhesion (natural rubber-based, synthetic rubber-based or acrylic-based material as a main ingredient, for example) on the gathering portion 11, or a method for immersing the gathering portion 11 in a solution or the like containing such a material.

Although a material of the gathering portion 11 is not particularly limited, the gathering portion 11 is porous, and preferably flexible and/or elastic (for example, urethane). When the gathering portion 11 is a flexible and/or elastic material, red mites or the like easily enter the gathering portion 11. That is, the red mites or the like can easily enter the hole 11h narrower than the width W2, and further, they can enter even the hole 11h narrower than the width W1 of the body. The red mite having entered such hole 11h cannot come out of and move from the hole 11h, thereby causing the gathering portion 11 to easily catch the red mites or the like. With flexibility, red mites can be easily gathered. This is because an inside of the gathering portion 11 can be easily maintained at a stable temperature compared with surroundings. With a material of the gathering portion 11 having a moisturizing property, red mites can be more easily gathered. This is because the environment inside the gathering portion 11 can be easily made attractive for the red mites or the like.

As shown in Fig. 1, the pair of heat retaining portions 15, 16 is provided on the insect pest gathering apparatus 1 in the present embodiment so as to sandwich the gathering portion 11. More specifically, the heat retaining portion 15 is provided on the base plate of the case 2, while the gathering portion 11 is provided on the heat retaining portion 15. Then, the heat retaining portion 16 is placed on a top surface of the gathering portion 11, thereby sandwiching the gathering portion 11 between the pair of heat retaining portions 15, 16.

The pair of heat retaining portions 15, 16 is made of a material having a heat retaining property, that is, a material having low thermal conductivity. The pair of heat retaining portions 15, 16 are made of corrugated cardboard.

When the insect pest gathering apparatus 1 in the present embodiment is placed on a floor or the like for use, one made of a material having a high thermal insulating property such as the foamed synthetic resin is preferably used for the heat retaining portion 15 in order to increase the heat retaining property. The pair of heat retaining portions 15, 16 is preferably made of a material having a heat retaining property as well as a moisturizing property. With the material of the pair of heat retaining portions 15, 16 having the moisturizing property, the inside of the gathering portion 11 between the pair of heat retaining portions 15 and 16 can be maintained at certain humidity (for example, humidity attractive for red mites). Consequently, the gathering portion 11 can more easily gather red mites because the environment inside the gathering portion 11 between the pair of heat retaining portions 15 and 16 can be maintained attractive for red mites. For example, when corrugated cardboard is used as a material of the pair of heat retaining portions 15, 16, both of the heat retaining property and moisturizing property can be imparted to the pair of heat retaining portions 15, 16. Further, when not only the pair of heat retaining portions 15, 16 but also the gathering portion 11 have the moisturizing property, the environment inside the gathering portion 11 can be easily made attractive for the red mites or the like.

With the pair of heat retaining portions 15, 16, space into which a red mite can creep can be formed at a boundary between the gathering portion 11 and each of the pair of heat retaining portions 15, 16. This is because the gathering portion 11 is porous, as described above. Then, the red mites can also be gathered in the space.

As for both of or one of the pair of heat retaining portions 15, 16, projections and depressions may be formed on a surface facing to the gathering portion 11. In this instance, space having a proper size (space 16h in Fig. 1) can be formed between the gathering portion 11 and each of or one of the pair of heat retaining portions 15, 16. Then, space in which red mites easily gather can be formed at the boundary between the gathering portion 11 and each of the pair of heat retaining portions 15, 16. Moreover, the space can provide an environment suitable for forming a colony WC of red mites because the space can be wider than the hole 11h of the gathering portion 11. Consequently, red mites can be more easily gathered. When the colony WC of red mites is formed in the space, the number of red mites moving from the colony WC of red mites to the holes 11h of the gathering portion 11 can be increased. Then, the number of red mites caught by the gathering portion 11 can be increased, thereby enhancing efficiency of catching red mites.

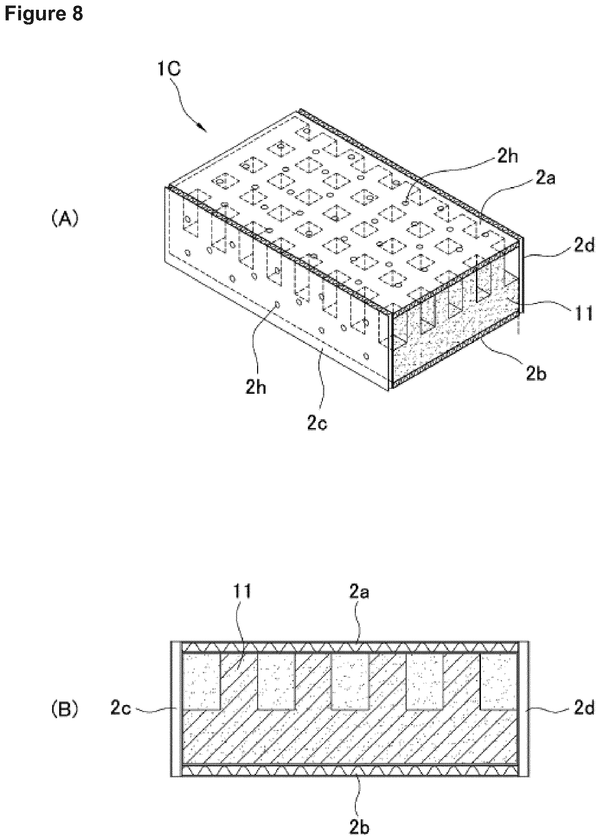

On the other hand, projections and depressions may be formed on a surface of the gathering portion 11 in the insect pest gathering apparatus 1. Even in this instance, space having a proper size can be formed between the surface of the gathering portion 11 and each of the pair of heat retaining portions 15, 16. Then, the space can provide an environment suitable for forming a colony WC of red mites, so that red mites can be more easily gathered. The projections and depressions on the surface of the gathering portion 11 are not particularly limited. A shape in which a lot of corners and space can be formed is preferable such as a grid shape (see Fig. 8), a prism shape, a shape of the Miura fold, or the like. Such shapes allow red mites to easily enter inside the gathering portion 11 and allow a lot of narrow space attracting red mites to be provided.

The projections and depressions may also be formed on both surface of the gathering portion 11 and surfaces of the pair of heat retaining portions 15, 16.

The case 2 used for the insect pest gathering apparatus 1 in the present embodiment is not particularly limited. For example, a box enclosing the gathering portion 11 and the pair of heat retaining portions 15, 16 inside thereof can be used as the case 2. In this instance, red mites can be gathered in the gathering portion 11 by providing a vent (that is a passage for red mites) on a wall surface of the box (that is, the case 2).

With such a configuration, the gathering portion 11 can be kept warm by not only the pair of heat retaining portions 15, 16 but also by the case 2. Since the red mites can easily form the colony WC in not only the gathering portion 11 but also in whole space inside the case 2, an effect of gathering red mites can be further enhanced. In this instance, when the case 2 is made of a material having a moisturizing property (for example, vinyl), the surfaces of the pair of heat retaining portions 15, 16 can be covered with the material having the moisturizing property. Then, the gathering portion 11 can be moisturized by the case 2.

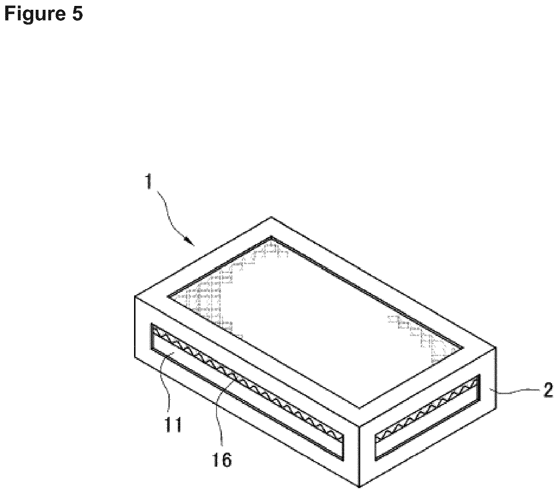

As shown in Fig. 5, one having a structure in which vents (that is, a passage for red mites) are provided on five surfaces of a box except a base plate may be used as the case 2. In this instance, when a material of the heat retaining portion 16 is appropriately selected, the colony WC of red mites can be formed also on a top surface of the heat retaining portion 16, similarly to Fig. 1. The vents can be certainly provided all over the six surfaces of the case 2 including the base plate.

The case 2 is not necessarily provided. However, with the case 2, handleability of the insect pest gathering apparatus 1 in the present embodiment can be increased. Further, the gathering portion 11 can be easily kept warm or moisturized by the case 2, as described above.

Further, a material of the case 2 is not particularly limited, and can be any as long as the gathering portion 11 and the pair of heat retaining portions 15, 16 can be held inside thereof. In particular, it is preferable to employ one having rigidity to the extent of allowing the insect pest gathering apparatus 1 in the present embodiment to be maintained in a predetermined shape. For example, plastic or paper (for example, corrugated cardboard) can be used as a material of the case 2. In particular, the case 2 itself has the heat retaining property and the moisturizing property with using corrugated cardboard made of paper. This therefore allows the gathering portion 11 to be easily kept warm or moisturized without the pair of heat retaining portions 15, 16.

The size of the insect pest gathering apparatus 1 in the present embodiment is not limited. A suitable size may be employed according to equipment or a place to be installed. In particular, the insect pest gathering apparatus 1 in the present embodiment may be formed in a size similar to a chicken egg. More specifically, a width of the insect pest gathering apparatus 1 with a rectangular shape is approximately 30 to 100 mm, a length thereof is approximately 30 to 60 mm, and a height thereof is approximately 20 to 50 mm. The insect pest gathering apparatus 1 in such a size can be provided on an automatic egg conveyor belt installed in the poultry house. The apparatus can be installed and collected together with eggs. This can save a worker from having to install and collect the apparatus.

A method for exterminating the red mites caught by the insect pest gathering apparatus 1 in the present embodiment is not particularly limited. When the insect pest gathering apparatus 1 in the present embodiment is provided in space with a low oxygen concentration, the caught red mites can be easily and cleanly exterminated.

For example, when the insect pest gathering apparatus 1 in the present embodiment is enclosed in a bag and left as it is, an oxygen concentration inside the bag soon becomes low. Therefore, the caught red mites can be exterminated. Then, when an oxygen absorber is enclosed in the bag with the insect pest gathering apparatus 1 in the present embodiment, the caught red mites can be exterminated with the oxygen concentration inside the bag becoming low. In this instance, the exterminated red mites can be kept inside the case 2 if the case 2 is the above sealed case, thereby easily disposing of the exterminated red mites.

In particular, air inside the bag is reduced with a deaerator such as a vacuum cleaner or a vacuum pump before hermetically sealing the bag. In that case, time to exterminate red mites can be reduced because time required to make the oxygen concentration inside the bag low can be reduced. Alternatively, air inside the bag is reduced only with a deaerator such as a vacuum cleaner or a vacuum pump. Even in this instance, time to exterminate red mites can be reduced because time required to make the oxygen concentration inside the bag low can be reduced.

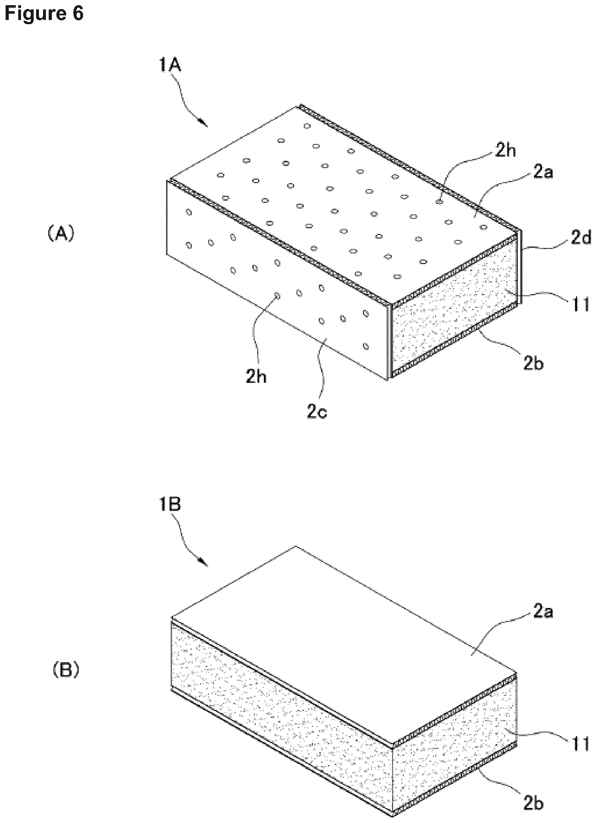

The insect pest gathering apparatus 1 may have a shape shown in Figure 6.

As shown in Figure 6 (A), an insect pest gathering apparatus 1A is obtained by surrounding a periphery (four surfaces) of the gathering portion 11 by plate-like members 2a to 2d. That is, in the insect pest gathering apparatus 1A, the gathering portion 11 is housed in the case 2 obtained by combining the four plate-like members surrounding the periphery of the gathering portion 11.

As for the insect pest gathering apparatus 1A, space inside the plate-like members 2a to 2d is blocked to some extent from an outside even if the plate-like members 2a to 2d are made of a material not having a heat retaining property. Then, the space surrounded by the plate-like members 2a to 2d (that is, the gathering portion 11) can be kept warm even if the plate-like members 2a to 2d are not made of a special material having a heat retaining property.

Moreover, the insect pest gathering apparatus 1A can be formed simply by providing and fixing the plate-like members 2a to 2d to the periphery of the gathering portion 11, or by forming a pipe-like case 2 with the plate-like members 2a to 2d and inserting the gathering portion 11 into space inside thereof. Then, the insect pest gathering apparatus 1A can be easily and inexpensively formed.

In this instance, a method for providing and fixing the plate-like members 2a to 2d to the periphery of the gathering portion 11, or a method for fixing the plate-like members 2a to 2d each other is not particularly limited. The plate-like members 2a to 2d can be fixed to the gathering portion 11, for example, by sticking the plate-like members 2a to 2d on the respective surfaces of the gathering portion 11 with an adhesive, or by providing the plate-like members 2a to 2d on the periphery of the gathering portion 11 and bundling them with a string or a rubber band.

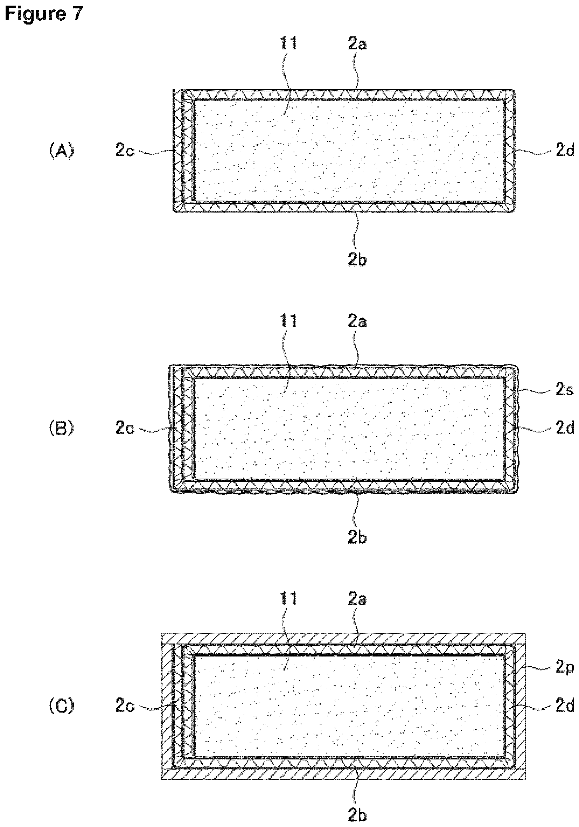

As shown in Figure 7(A), the plate-like members 2a to 2d obtained by bending one plate may be provided on the periphery of the gathering portion 11. That is, one plate may be bent and wound around the gathering portion11.

When a material having a heat retaining property is employed as the plate-like members 2a to 2d in the above insect pest gathering apparatus 1A, the heat retaining property can be further enhanced. For example, when one having hollow space inside thereof is used as the plate-like members 2a to 2d, the heat insulating property of the plate-like members 2a to 2d themselves is enhanced. Then, the case itself can function as the heat retaining portion. Therefore, a structure of the insect pest gathering apparatus 1 A can be advantageously simplified. Moreover, if the hollow space inside the plate-like members 2a to 2d communicates with an outer surface, some of the red mites gathered in the gathering portion 11 can be gathered in the hollow space inside the plate-like members 2a to 2d.

For example, corrugated cardboard may be used as the plate-like members 2a to 2d having hollow space inside thereof. Since the corrugated cardboard itself has the heat retaining property, the case 2 itself can have a heat retaining function approximately equal to that of the heat retaining portion described above. Then, the heat retaining property of the gathering portion 11 can be enhanced without particularly providing the heat retaining portion. Consequently, an environment in the gathering portion 11 can be maintained so that red mites can easily form a colony. Further, the corrugated cardboard is generally formed in such a shape that a corrugated sheet is provided between a pair of plate-like members. Therefore, a through hole extending between end faces of the corrugated cardboard lies between the pair of plate-like members. Then, the red mites can enter the through hole, thereby capable of causing an inside of the through hole to function as space for gathering red mites.

As for the case 2, a sheet-like member or the like with a section thereof having a honeycomb structure maybe used. Similarly to the corrugated cardboard, such a sheet-like member or the like has a large number of through holes extending between the end faces, and therefore, the similar effect obtained by the corrugated cardboard can be produced.

When the corrugated cardboard is used as the plate-like members 2a to 2d, the insect pest gathering apparatus 1 A can have a high degree of flexibility in shape, size and the like. That is, the insect pest gathering apparatus 1A can be freely changed in length or shape because the corrugated cardboard (particularly, corrugated cardboard made of paper) is easily processed. For example, even an extremely large insect pest gathering apparatus 1 A (such as one having a length of approximately 1 to 5 m or one having a thickness of approximately 5 to 15 cm) or even an insect pest gathering apparatus 1A in a complicated shape (such as L shape or U shape) can be formed. Since the shape and size of the insect pest gathering apparatus 1 A can be adjusted depending on an environment in which the insect pest gathering apparatus 1A is installed, an effect of gathering red mites can be enhanced. Moreover, even when the insect pest gathering apparatus 1 A is increased in size, deterioration of handleability can be prevented. This is because the corrugated cardboard is light. The insect pest gathering apparatus 1A may also be formed in a size similar to a chicken egg. In this instance, as described above, the insect pest gathering apparatus 1 A can be provided on the automatic egg conveyor belt installed in the poultry house. The apparatus can be automatically installed or collected together with eggs.

A material of the corrugated cardboard used as the plate-like members 2a to 2d is not particularly limited. The corrugated cardboard may be made of plastic or paper.

In particular, when paper corrugated cardboard is used as the plate-like members 2a to 2d, the corrugated cardboard can be easily processed on a site where the insect pest gathering apparatus 1A is used. For example, a material easily cut with a cutter is employed as the gathering portion 11, while the plate-like members 2a to 2d are made of paper corrugated cardboard. In that case, the insect pest gathering apparatus 1 A can be easily processed on the site. Consequently, the insect pest gathering apparatus 1 A can be appropriately used depending on the site where the insect pest gathering apparatus 1A is used.

Further, when the paper corrugated cardboard is used as the plate-like members 2a to 2d, the case 2 can be incinerated. Then, the insect pest gathering apparatus 1 A can be incinerated as it is if the gathering portion 11 is also made of a combustible material. Since the insect pest gathering apparatus 1A in which the red mites gather can be incinerated as it is, the red mites gathered in the insect pest gathering apparatus 1A can be easily exterminated.

The paper corrugated cardboard has not only a heat retaining property but also a moisturizing property. In the case where the corrugated cardboard is used as the plate-like members 2a to 2d, the inside of the gathering portion 11 surrounded by the plate-like members 2a to 2d can be maintained at certain humidity (for example, humidity attractive for red mites). That is, the inside of the gathering portion 11 surrounded by the plate-like members 2a to 2d can be easily maintained in an environment attracting the red mites. The red mites can therefore be more easily gathered in the gathering portion 11.

Alternatively, the surfaces of the plate-like members 2a to 2d may be covered with a material having low water permeability in order to increase the moisturizing property. In this instance, an effect of moisturizing the gathering portion 11 can be enhanced compared with the case of using the corrugated cardboard alone. As shown in Figure 7(8), for example, a sheet 2s made of vinyl may be wound around the plate-like members 2a to 2d. As shown in Figure 7(C), a pipe-like member 2p made of plastic is formed, and then, the insect pest gathering apparatus 1A in the present embodiment may be inserted inside thereof.

The moisturizing property can also be increased by using, as the plate-like members 2a to 2d, one having a vinyl layer or the like on the surface of the corrugated cardboard. That is, the moisturizing property can be increased when a material having a layer with the heat retaining property and a layer with low water permeability is used as the plate-like members 2a to 2d. In the case of using such a material, the layer having the heat retaining property is placed inside thereof (namely, on a side of the gathering portion 11), while the layer having low water permeability is placed outside thereof. With such placement, the effect of moisturizing and keeping the gathering portion 11 warm can be further enhanced by the plate-like members 2a to 2d.

In the insect pest gathering apparatus 1A, the gathering portion 11 may communicate with the outside only through a surface to which the plate-like members 2a to 2d are not fixed. Alternatively, as shown in Figure 6(A), a plurality of through holes 2h extending between a surface on a side of the gathering portion 11 and an outer surface may be formed in the plate-like members 2a to 2d of the case 2. For example, when the through holes 2h having a diameter of several to several tens of millimeters are formed in the plate-like members 2a to 2d, red mites can move to the gathering portion 11 through the through holes 2h. Therefore, the red mites can be easily gathered in the gathering portion 11 even when the periphery of the gathering portion 11 is surrounded by the case 2.

The hole diameter of the through hole 2h is not particularly limited to the above range. The hole diameter may have any length as long as an insect pest or the like to be caught can pass through the through hole 2h.

When the heat retaining portion is provided in addition to the case 2, a through hole is preferably provided on the heat retaining portion. This is because the red mites can move to the gathering portion 11 through the through hole in the heat retaining portion. For example, in the case where the heat retaining portion is obtained by providing a member having the heat retaining property between the case 2 and the gathering portion II, a through hole extending from the case 2 to the gathering portion 11 via the heat retaining portion may be simply formed.

Further, if projections and depressions are formed on the surface of the gathering portion 11, space can be formed between the case 2 and the surface of the gathering portion 11. Then, the space can provide an environment suitable for forming a colony we of red mites, so that red mites can be more easily gathered. The projections and depressions on the surface of the gathering portion 11 are not particularly limited. For example, as shown in Fig. 8, when the surface of the gathering portion 11 is formed in a grid shape, a large number of depressions can be formed in the surface of the gathering portion 11. The depressions can provide an environment suitable for forming the colony WC of red mites. A prism shape, a shape of the Miura fold or the like allows red mites to easily enter inside the gathering portion 11 and allows a lot of narrow space attracting red mites to be provided. This is because a lot of corners and space can be formed by employing these shapes.

Like an insect pest gathering apparatus 1 B shown in Fig. 6(B), the plate-like members 2a, 2b may be provided only on two surfaces of the gathering portion 11. An effect of keeping the gathering portion 11 warm can be maintained to some extent even in this instance. For example, when the case 2 is installed in the poultry house by sticking the case 2 on a wall surface or the like, a shape like the insect pest gathering apparatus 1B is preferably employed. This is because the red mites can move to the gathering portion 11 through four surfaces of the periphery of the insect pest gathering apparatus 1B, thereby increasing efficiency of gathering the red mites.

A function of gathering insect pests according to the insect pest gathering apparatus of the present invention was confirmed.

In the experiment, the insect pest gathering apparatus was installed and left for a certain period in a windowless poultry house, followed by being collected. The number of red mites in the insect pest gathering apparatus was confirmed.

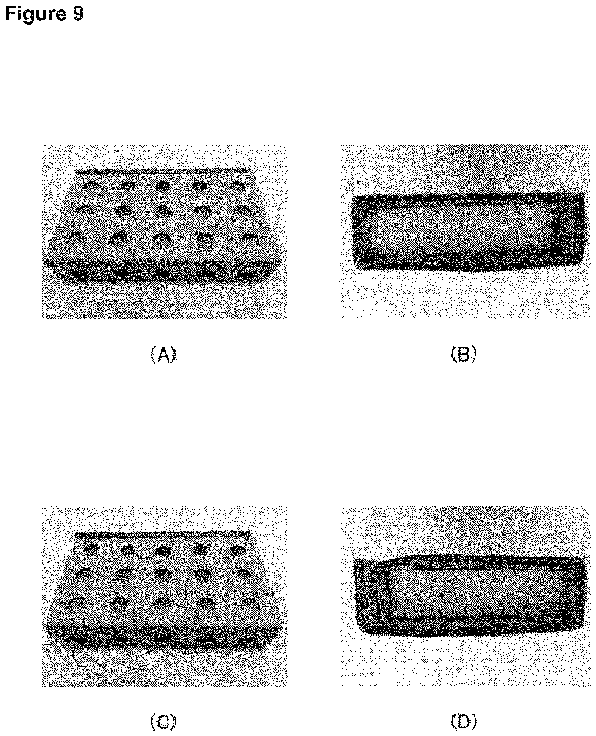

Fig. 9 shows the insect pest gathering apparatuses used in the experiment.

The insect pest gathering apparatus is obtained by providing corrugated cardboard around the gathering portion.

Special urethane foam was used for the gathering portion. A size of the gathering portion is approximately 90 mm x 60 mm x 25 mm.

An insect pest gathering apparatus A was produced by winding commercially available single-flute corrugated cardboard ((A/F) thickness of about 5 mm) around side surfaces of the gathering portion (Fig. 9 (A), (B)).

An insect pest gathering apparatus W was also produced by winding commercially available double-flute corrugated cardboard ((W/F) thickness of about 8 mm) around side surfaces of the gathering portion (Fig. 9 (C), (D)).

These insect pest gathering apparatuses were installed and left in the windowless poultry house for 24 hours, 48 hours and 72 hours, followed by being collected. Then, the red mites were left in space with a low oxygen concentration for a several hours to be destroyed. After that, the number of gathered red mites was counted. The number of red mites was counted by hand.

Note that an average temperature was approximately 5 °C and average humidity was approximately 79% during the period of the experiment. That was a season when red mites were not active.

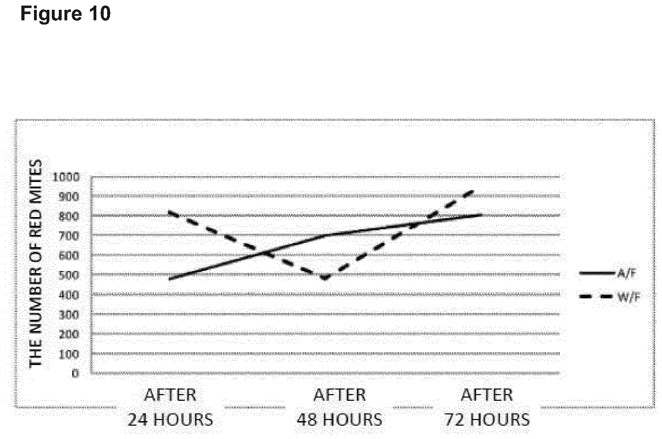

Fig. 10 to 12 show the results.

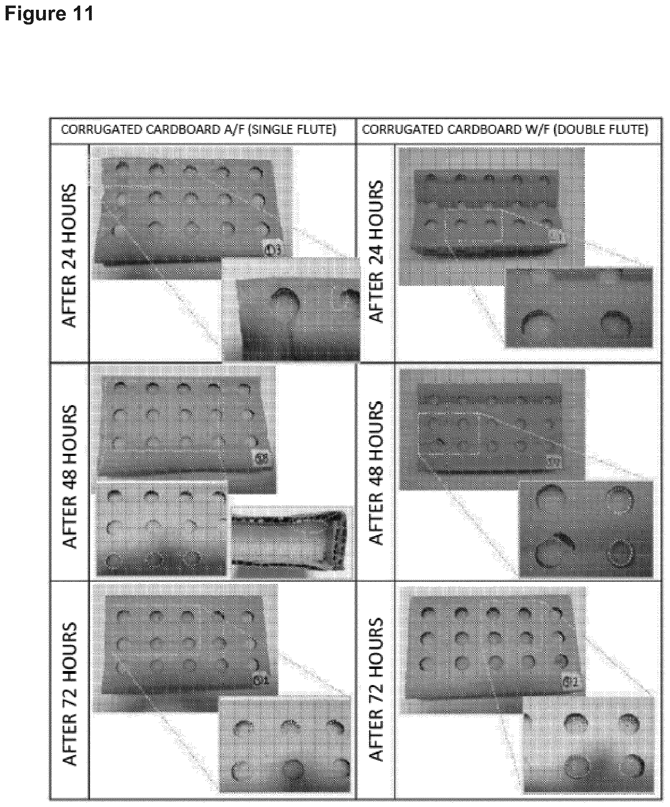

As shown in Fig. 10 and 11, a large number of red mites could be gathered by both the insect pest gathering apparatuses made of A/F and W/F (hereinafter, simply referred to as A/F and W/F) even after 24 hours from the installation. Further, the red mites could be caught by the gathering portion, as shown in Fig. 12.

The number of caught red mites reached a maximum in both A/F and W/F after 72 hours. This may be caused because not only red mites gathered from outside A/F or W/F but also larvae having hatched from eggs laid in the gathering apparatuses made of A/F and W/F were caught. That is, the insect pest gathering apparatus of the present invention is supposed to provide a suitable egg-laying site for red mites. According to the insect pest gathering apparatus of the present invention, not only adult red mites but also eggs of the red mites can be exterminated. Therefore, the number of red mites may be effectively prevented from increasing.

The insect pest gathering apparatus of the present invention is suitable for an apparatus for exterminating insect pests of arthropods or the like such as red mites, northern fowl mites, mites and fleas having a similar nature to the red mites and northern fowl mites, and flies.

### List of reference signs

- 1: Insect pest gathering apparatus
- 2: Case
- 2h: through hole
- 11: gathering portion
- 11h: hole
- 15: heat retaining portion
- 16: heat retaining portion
- 16h: space
- CH: poultry house
- KG: cage
- WC: colony of red mites

## Claims

1. An insect pest gathering apparatus (1) for gathering insect pests or the like such as mites and fleas, comprising:
a gathering portion (11) having a porous structure with a large number of holes (2h) continuously lying from a surface to an inside,
wherein a hole diameter of the hole (11h) in the gathering portion (11) has a length suitable for entering by the insect pest or the like,
**characterized in that** a heat retaining portion (15, 16) is provided on an outer surface of the gathering portion (11), and a material of the heat retaining portion (15, 16) is corrugated cardboard.

2. The insect pest gathering apparatus according to claim 1, **characterized in that** projections and depressions are provided on both of or one of surfaces of the heat retaining portion (15, 16) and the gathering portion (11) facing each other.

3. The insect pest gathering apparatus according to anyone of the preceding claims, **characterized in that** the gathering portion randomly has the holes (11h) inside thereof with the hole diameter of approximately 0.01 to 1 mm.

4. The insect pest gathering apparatus according to anyone of the preceding claims, **characterized in that** the gathering portion (11) is made of a material having flexibility.

5. The insect pest gathering apparatus according to anyone of the preceding claims, **characterized in that** the heat retaining portion (15, 16) provided on the outer surface of the gathering portion (11) and/or the gathering portion (11) have a moisturizing function.

6. The insect pest gathering apparatus according to claim 5, **characterized in that** projections and depressions are provided on both of or one of surfaces of the heat retaining portion (15, 16) and the gathering portion (11) facing each other.

7. The insect pest gathering apparatus according to claim 5 or 6, **characterized in that** the heat retaining portion (15, 16) is made of a material having hollow space (16h) inside thereof.

8. The insect pest gathering apparatus according to anyone of the claims 5 to 7, **characterized in that** a material of the heat retaining portion (15, 16) is corrugated cardboard.

9. The insect pest gathering apparatus according to anyone of the claim 5 to 8, **characterized in that** a through hole (2h) is formed in the heat retaining portion (15, 16), the through hole (2h) extending between a surface on a side of the gathering portion (11) and an outer surface.

10. The inset pest gathering apparatus according to anyone of the preceding claims, **characterized by** a size similar to a chicken egg.

## Patentansprüche

1. Sammelvorrichtung (1) für Insektenschädlinge oder dergleichen wie Milben und Flöhe, umfassend:
Einen Sammelabschnitt (11) mit poröser Struktur mit einer großen Anzahl von Öffnungen (2h), die kontinuierlich von einer Oberfläche zu einem Inneren verlaufen,
wobei ein Öffnungsdurchmesser der Öffnung (11h) im Sammelabschnitt (11) eine zum Eindringen des Insektenschädlings oder dergleichen geeignete Länge hat,
**dadurch gekennzeichnet, dass** ein wärmehaltender Abschnitt (15, 16) an einer Außenfläche des Sammelabschnitts (11) vorgesehen ist und ein Material des wärmehaltenden Abschnitts (15, 16) Wellpappe ist.

2. Sammelvorrichtung (1) für Insektenschädlinge nach Anspruch 1, **dadurch gekennzeichnet, dass** Erhebungen und Vertiefungen an beiden oder einer der Oberflächen des wärmehaltenden Abschnitts (15, 16) und dem Sammeiabschnitt (11) vorgesehen sind, die einander zugewandt sind.

3. Sammelvorrichtung (1) für Insektenschädlinge nach einem der vorhergehenden Ansprüche, **dadurch gekennzeichnet, dass** die im Inneren des Sammelabschnitts beliebig angeordneten Öffnungen (11h) einen Öffnungsdurchmesser zwischen ca. 0,01 mm und 1 mm aufweisen.

4. Sammelvorrichtung (1) für Insektenschädlinge nach einem der vorhergehenden Ansprüche, **dadurch gekennzeichnet, dass** der Sammelabschnitt (11) aus einem Material mit Flexibilität hergestellt ist.

5. Sammelvorrichtung (1) für Insektenschädlinge nach einem der vorhergehenden Ansprüche, **dadurch gekennzeichnet, dass** der an der Außenfläche des Sammelabschnitts (11) vorgesehene wärmehaltende Abschnitt (15, 16) und/oder der Sammelabschnitt (11) eine Befeuchtungsfunktion haben.

6. Sammelvorrichtung (1) für Insektenschädlinge nach Anspruch 5, **dadurch gekennzeichnet, dass** Erhebungen und Vertiefungen auf beiden oder einer der Oberflächen des wärmehaltenden Abschnitts (15, 16) und des Sammelabschnitts (11) vorgesehen sind, die einander zugewandt sind.

7. Sammelvorrichtung (1) für Insektenschädlinge nach Anspruch 5 oder 6, **dadurch gekennzeichnet, dass** der wärmehaltende Abschnitt (15, 16) aus einem Material mit einem Hohlraum (16h) in dessen Inneren hergestellt ist.

8. Sammelvorrichtung (1) für Insektenschädlinge nach einem der Ansprüche 5 bis 7, **dadurch gekennzeichnet, dass** ein Material des wärmerückhaltenden Abschnitts (15, 16) Wellpappe ist.

9. Sammelvorrichtung (1) für Insektenschädlinge nach einem der Ansprüche 5 bis 8, **dadurch gekennzeichnet, dass** eine Durchgangsöffnung (2h) im wärmehaltenden Abschnitt (15, 16) ausgebildet ist, wobei sich die Durchgangsöffnung (2h) zwischen einer Oberfläche an einer Seite des Sammelabschnitts (11) und einer Außenfläche erstreckt.

10. Sammelvorrichtung (1) für Insektenschädlinge nach einem der vorhergehenden Ansprüche, **gekennzeichnet durch** eine Größe ähnlich derjenigen eines Hühnereis.

## Revendications

1. Appareil de collecte d'insectes nuisibles (1) pour collecter des insectes nuisibles ou similaires tels que des mites et des puces, comprenant :
une partie de collecte (11) ayant une structure poreuse avec un grand nombre de trous (2h) placés de manière continue à partir d'une surface jusqu'à un intérieur,
dans lequel un diamètre de trou du trou (11h) dans la partie de collecte (11) a une longueur appropriée pour que l'insecte nuisible ou similaire y pénètre,
**caractérisé en ce qu'**une partie de retenue de chaleur (15, 16) est prévue sur une surface externe de la partie de collecte (11), et un matériau de la partie de retenue de chaleur (15, 16) est du carton ondulé.

2. Appareil de collecte d'insectes nuisibles selon la revendication 1, **caractérisé en ce que** des saillies et des dépressions sont prévues sur les deux ou sur l'une des surfaces de la partie de retenue de chaleur (15,16) et de la partie de collecte (11) se faisant face.

3. Appareil de collecte d'insectes nuisibles selon l'une quelconque des revendications précédentes, **caractérisé en ce que** la partie de collecte possède, de manière aléatoire, des trous (11h) à l'intérieur de cette dernière, avec un diamètre de trou d'approximativement de 0,01 à 1 mm.

4. Appareil de collecte d'insectes nuisibles selon l'une quelconque des revendications précédentes, **caractérisé en ce que** la partie de collecte (11) est réalisée avec un matériau présentant une flexibilité.

5. Appareil de collecte d'insectes nuisibles selon l'une quelconque des revendications précédentes, **caractérisé en ce que** la partie de retenue de chaleur (15, 16) prévue sur la surface externe de la partie de collecte (11) et/ou la partie de collecte (11) ont une fonction d'humidification.

6. Appareil de collecte d'insectes nuisibles selon la revendication 5, **caractérisé en ce que** les saillies et les dépressions sont prévues sur les deux ou l'une des surfaces de la partie de retenue de chaleur (15, 16) et de la partie de collecte (11) se faisant face.

7. Appareil de collecte d'insectes nuisibles selon la revendication 5 ou 6, **caractérisé en ce que** la partie de retenue de chaleur (15, 16) est réalisée avec un matériau ayant un espace creux (16h) à l'intérieur de ce dernier.

8. Appareil de collecte d'insectes nuisibles selon l'une quelconque des revendications 5 à 7, **caractérisé en ce qu'**un matériau de la partie de retenue de chaleur (15, 16) est du carton ondulé.

9. Appareil de collecte d'insectes nuisibles selon l'une quelconque des revendications 5 à 8, **caractérisé en ce qu'**un trou débouchant (2h) est formé dans la partie de retenue de chaleur (15, 16), le trou débouchant (2h) s'étendant entre une surface sur un côté de la partie de collecte (11) et une surface externe.

10. Appareil de collecte d'insectes nuisibles selon l'une quelconque des revendications précédentes, **caractérisé par** une taille similaire à un oeuf de poule.
